# EUROPÄISCHE PATENTANMELDUNG

(11) **EP 1 400 422 A1**
(43) Veröffentlichungstag der Anmeldung: **24.03.2004**
(21) Anmeldenummer: 03020730.2
(22) Anmeldetag: 12.09.2003
(51) Int. Cl.: B60S 1/38, B60S 1/52

(54) **Scheibenwischer für Fahrzeuge**

(30) Priorität: 18.09.2002 DE 10243287
(71) Anmelder: Volkswagen Aktiengesellschaft, 38436 Wolfsburg (DE)
(72) Erfinder: Penning, Hans-Peter, 38442 Wolfsburg (DE)

(57) **Zusammenfassung**

Die Erfindung betrifft einen Scheibenwischer für Fahrzeuge, mit einem Wischerarm und einem an diesem angeordneten und an einer Fahrzeugscheibe anliegenden, langgestreckten, gummielastischen Wischerblatt mit einer Windleitfläche und einer Wischlippe und mit einem federelastischen, langgestreckten Träger. Sie löst die Aufgabe, einen derartigen Scheibenwischer so zu gestalten, dass dieser eine erhöhte Verwindungssteifigkeit hat. Dazu ist der Träger des Wischerblattes (1, 13, 17, 19, 23) ein Hohlprofil (18, 20) oder weist eine torsionssteife Waben- oder Gerüststruktur (5, 28) auf und ist allseitig von dem Material des Wischerblattes (1, 13, 17, 19, 23) umgeben.

## Beschreibung

Die Erfindung betrifft einen Scheibenwischer für Fahrzeuge, insbesondere zur Anordnung an der Frontscheibe eines Kraftfahrzeugs.

In zunehmendem Maße sind sog. Aero-Scheibenwischer an der Frontscheibe eines Kraftfahrzeugs im Einsatz, bei denen das Wischerblatt direkt, also ohne ein zu diesem gehörendes Bügelsystem, über eine Anschlussvorrichtung am Wischerarm angeordnet ist und in der Regel einen langgestreckten und federelastischen, gekrümmten Träger und eine mit diesem verbundene, langgestreckte und gummielastische Wischerleiste mit einer Wischlippe aufweist, die infolge eines durch den Wischerarm über die Anschlussvorrichtung auf das Wischerblatt aufgebrachten Anpressdruckes an der jeweiligen Scheibe elastisch anliegt. Die Wischerleiste ist auf ihrer der Wischlippe abgewandten Seite zu einem Luftleitprofil geformt, wodurch der Scheibenwischer auch bei hohen Fahrgeschwindigkeiten sicher an der Frontscheibe anliegt. Hinsichtlich der Verwindungssteifigkeit der Wischerleiste bleiben allerdings Wünsche offen. Vorteilhaft ist, dass derartige Aero-Scheibenwischer vorteilhaft niedrigbauend und optisch auch sehr ansprechend sind. Beispielsweise haben die DE 197 29 864 A1 und die DE 197 39 256 A1 einen solchen Auero-Scheibenwischer zum Gegenstand.

Auch sind Scheibenwischerwischeranlagen bekanntgeworden, bei denen die Spritzdüsen für einen Waschflüssigkeitsauftrag auf die Scheibe an dem aus einem Wischerarm und einem an diesem angeordneten Wischerblatt gebildeten Scheibenwischer angeordnet sind, um den Abstand der Spritzdüse zur Scheibe zu verringern und den Waschflüssigkeitsauftrag weitgehend unabhängig von der Fahrgeschwindigkeit und einer Windbeaufschlagung zu machen. Mit einer solchen Anordnung können die Sichtverhältnisse verbessert und der Waschflüssigkeitsverbrauch gesenkt werden, weil die Waschflüssigkeit definierter und gezielter eingesetzt wird. Überdies können durch die Verlagerung der Spitzdüse von der Karosserie, insbesondere der Motorhaube, auf den Scheibenwischer die Auerodynamik und das optische Erscheinungsbild des Fahrzeugs verbessert werden. So beschreibt die DE 42 44 339 A1 eine Scheibenwischeranlage, bei der an einer oder beiden Seiten des Wischerblattes in Längsrichtung der Wischerleiste Sprühröhrchen mit mehreren Sprühbohrungen montiert sind. Dabei kann die Waschflüssigkeitszufuhr nur zu der Seite des Scheibenwischers freigegeben werden, die gerade in Wischrichtung liegt. Eine vergleichbare Lösung ist in der DE 297 03 557 offenbart. Bei diesem Gegenstand sind mehrere Spritzdüsen in der Wischerleiste und im Wischerarm angeordnet, die durch eine im Wischerarm-Profil befindliche Leitung mit Waschflüssigkeit versorgt werden. Auf diese Weise werden ein genauer Waschflüssigkeitsauftrag und ein hoher Reinigungseffekt erreicht.

Es ist Aufgabe der Erfindung, einen Scheibenwischer nach dem Oberbegriff des Anspruchs 1 so zu gestalten, dass dieser eine erhöhte Verwindungssteifigkeit aufweist.

Diese Aufgabe wird bei einem Scheibenwischer nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht darin, dass bei einem Scheibenwischer, der einen Wischerarm und ein an diesem angeordnetes gummielastisches Wischerblatt mit einer Windleitfläche und einer Wischlippe und einen federelastischen Träger für das Wischerblatt aufweist, der Träger ein Hohlprofil, beispielsweise ein Rohr, ist oder eine Waben- oder Gerüstoder Fachwerkstruktur aufweist, beispielsweise eine sechseckige Wabenstruktur oder eine in Querrichtung des Wischerblattes dreieckige Gerüststruktur mit drei Längsholmen in Längsrichtung des Wischerblattes und zwischen diesen angeordneten Schrägverstrebungen (Kranauslegerstruktur), und in das Material des Wischerblattes eingebettet ist. Der Träger erhöht die Torsionssteifigkeit des Wischerblattes und verbessert dessen Anlage-Eigenschaften an der Fahrzeugscheibe. Vorzugsweise ist der Träger selbst torsionssteif ausgebildet. Abschlusskappen an den Enden der Wischerleiste zur Fixierung des Trägers an der Wischerleiste entfallen. Die Einkomponentenbauweise führt zu einer aufwandsreduzierten Herstellung. Bevorzugt ist das Material des Wischerblattes stoffschlüssig mit dem Trägermaterial verbunden, so dass durch die Einbettung des Trägers in das Wischerblattprofil ein einstückiges Wischerblatt gegeben ist, wobei das Trägermaterial aus einem Kunststoff einer nur geringen Elastizität besteht, und der vorgefertigte Träger eine Krümmung aufweist, die größer als die der Fahrzeugscheibe ist und das Wischerblatt ebenfalls diese Krümmung hat. Dabei ist das Wischerblatt durch die Werkstoffwahl für den Träger noch so elastisch, dass dieses über eine Anschlussvorrichtung durch den Wischerarm elastisch an die Fahrzeugscheibe andrückbar ist. Vorteilhaft ist dabei auch, dass das Wischerblatt nicht mehr in seiner Mitte am Wischerarm gehaltert sein muss, sondern dass eine außermittige Anschlussmöglichkeit gegeben ist, so dass der Wischerarm verkürzt ausgeführt sein kann.

Ein weiterer Vorteil ist dadurch gegeben, dass der Träger auch in seiner Projektion auf die Fahrzeugscheibe gekrümmt und an die Kontur der angrenzenden Fronthaube angepasst sein kann. Dadurch kann die Parkposition des Scheibenwischers, insbesondere eines auf der Beifahrerseite angeordneten Scheibenwischers, in Abhängigkeit von der Frontscheibenanordnung an der Fahrzeugkarosserie fronthaubennäher bestimmt sein, womit der Scheibenwischer unauffälliger ist und das optische Erscheinungsbild der Scheinwerferanordnung verbessert wird. Ein derartiger Scheibenwischer kann eine geringere Bauhöhe als ein herkömmlicher Aero-Scheibenwischer aufweisen und ist somit gegenüber einem solchen auch gewichtsreduziert. Die damit verbundene reduzierte Masse wiederum kann für eine Erhöhung der Wischgeschwindigkeit und Verbesserung der Wischleistung genutzt werden.

Das Wischerblatt kann mit einem Waschflüssigkeitskanal versehen sein, an dem auf die Fahrzeugscheibe gerichtete Düsenöffnungen angebracht oder an dem Spritzdüsen angeordnet sind, wobei der Waschflüssigkeitskanal mit einer am Wischerarm gehalterten Waschflüssigkeitszuleitung verbunden ist. Die Waschflüssigkeit kann auf diese Weise auf kürzestem Wege auf die durch den Scheibenwischer erreichbaren Fahrzeugscheibenbereiche gesprüht werden, in denen diese für einen effektiven Reinigungsprozess benötigt wird. Damit wird eine hoher Reinigungseffekt bei einer optimalen Nutzung der zugeführten Waschflüssigkeit erzielt. Da die Spritzdüsen dazu an der der Fahrzeugscheibe zugewandten Seite des Wischerblattes angeordnet oder in dieses integriert sind, sind sie bei einem Blick auf den Scheibenwischer von außen nicht sichtbar, so dass die Lösung zu einem guten optischen Gesamtbild beiträgt. An anderen Karosserieteilen, insbesondere der Fronthaube, angeordnete Spritzdüsen entfallen dadurch.

Der Waschflüssigkeitskanal kann vorteilhaft durch den Träger selbst gebildet sein, nämlich dann, wenn dieser aus einem Hohlprofil gebildet ist, oder am Träger zusätzlich ausgebildet und gemeinsam mit diesem in das Wischerblatt integriert sein. Eine effektive Reinigungswirkung wird bereits mit einem Wischerblatt erreicht, bei dem für jeweils eine Seite desselben zwei Spritzdüsen angeordnet sind, die jeweils einen Abstand von einem Ende des Wischerblattes aufweisen, der etwa einem Viertel der Länge desselben entspricht. Dabei sind die Spritzdüsen zweckmäßigerweise Fächerstrahldüsen, um einen breiten Waschflüssigkeitsauftrag auf der Scheibe zu erzielen.

Die Erfindung wird nachstehend anhand von Ausführungsbeispielen erläutert. In den zugehörigen Zeichnungen zeigen:
- Fig. 1:: ein Wischerblatt eines Scheibenwischers in einer Seitenansicht,
- Fig. 2:: dieses in der Draufsicht,
- Fig. 3:: einen an die Kontur des Fronthaubenrandes angepassten Scheibenwischer,
- Fig. 4:: eine perspektivische Darstellung des Wischerblattes eines Scheibenwischers mit integriertem Träger,
- Fig. 5:: den Träger in einer perspektivischen Darstellung,
- Fig. 6:: einen Querschnitt durch eine weitere Ausführung eines Wischerblattes für einen Scheibenwischer im Bereich einer Anschlussvorrichtung,
- Fig. 7:: einen Querschnitt durch eine dritte Ausführung eines Wischerblattes und
- Fig. 8:: eine vierte Ausführung eines Wischerblattes in perspektivischer Darstellung.

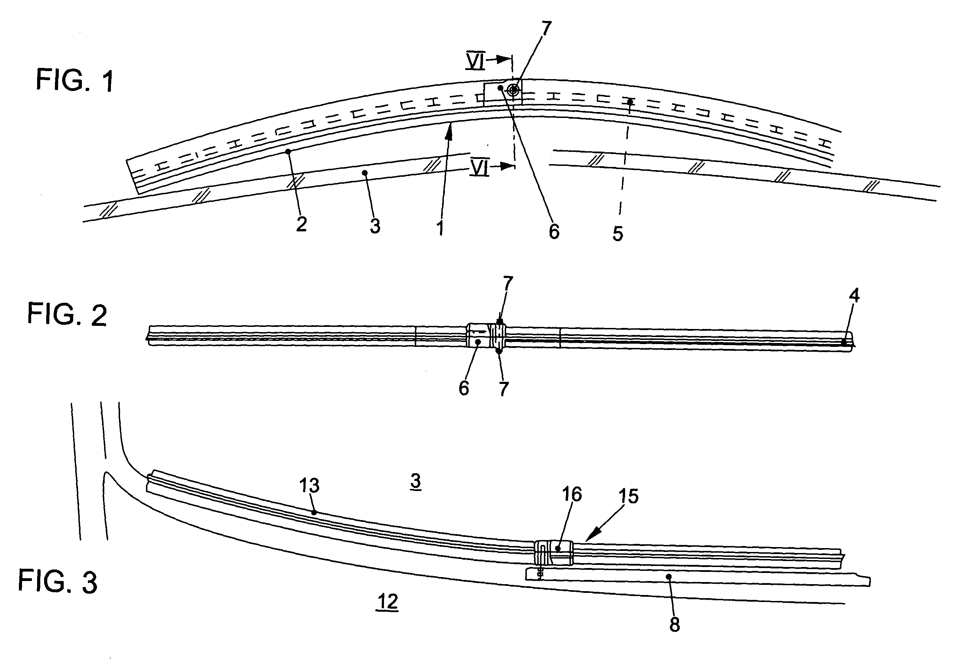

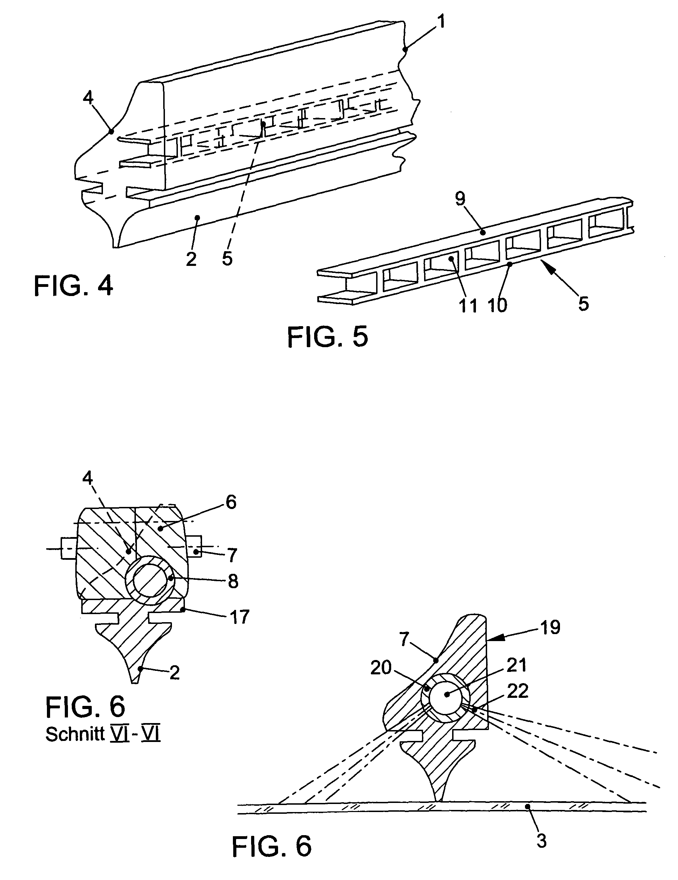

Das in den Fig. 1 und 2 gezeigte gummielastische Wischerblatt 1 weist eine Wischlippe 2 zur Anlage an einer Frontscheibe 3 eines Fahrzeugs, eine Windleitfläche 4 auf der der Wischlippe 2 abgewandten Seite sowie eine integrierte, torsionssteife Wabenstruktur (5, Fig. 4 und 5) als Träger für dieses auf. Die Wabenstruktur (5) ist aus PE gefertigt, vorbestimmt gekrümmt und in der Krümmungsebene begrenzt elastisch biegbar. Das Wischerblatt 1 ist mit einer nicht weiter ausgeführten, bekannten Anschlussvorrichtung 6 mit angeformten Gelenkzapfen 7 als Anschlusselemente zur Anordnung an Wischerarm (8, Fig. 3) eines Scheibenwischers versehen, über die ein Anpreßdruck auf dasselbe (1) in Richtung auf die Frontscheibe 3 aufgebracht wird, derart, dass das Wischerblatt 1 mit seiner gesamten Wischlippe 2 an die Frontscheibe 3 angedrückt ist und die unterschiedlichen Krümmungen derselben aufnimmt.

Die Wabenstruktur 5 und deren Anordnung im Wischerblatt 1 ist in den Fig. 5 und 4 dargestellt. Diese ist aus zwei im Abstand von und parallel zueinander angeordneten elastisch biegbaren Schienen 9 und 10 aus PE in einer Dicke von 0, 5 mm und im Abstand voneinander quer zu und an diesen angeformten Stegen 11 gebildet und durch Spritzgießen hergestellt, deren Abstand voneinander etwa dem Zweifachen ihrer Höhe entspricht. Diese Stege 11 verleihen der Struktur eine erhöhte Verwindungssteifigkeit und erlauben eine elastische Biegung quer zu deren Anordnungsebenen. Diese Wabenstruktur 5 ist allseitig vom gummielastischen Material des Wischerblattes 1 umgeben, ebenfalls durch Spritzgießen aufgebracht und stoffschlüssig mit diesem verbunden und verleiht dem gesamten Wischerblatt 1 die vorstehend genannten Eigenschaften.

Fig. 3 zeigt ein ebenso strukturiertes, jedoch in seiner Projektion auf die Frontscheibe 3 an die Krümmung einer angrenzenden Fronthaube 12 angepasstes Wischerblatt 13. Der mit diesem (13) versehene Wischerarm 8 liegt in der gezeigten Parkstellung des Scheibenwischers 15 am unteren Rand der Frontscheibe 3 an dieser an. Das Wischerblatt 13 ist dabei außerhalb der Mitte am Ende des Wischerarmes 8 über eine Anschlussvorrichtung 16 angelenkt, so dass dieser verkürzt ist.

Fig. 6 lässt in einer Querschnittsdarstellung eines Wischerblattes 17 im Bereich der Anschlussvorrichtung 6 in einer alternativen Ausführung erkennen, dass als Träger ein torsionssteifes Rohr 18 aus PE anstelle der Wabenstruktur 5 integriert und mit dem Material des Wischerblattes 17 ausgefüllt ist. Dieses Wischerblatt 17 ist im Bereich seiner Windleitfläche 4 und des Anordnungsbereiches der Anschlussvorrichtung 6 derart ausgespart, dass die längsgeteilte Anschlussvorrichtung 6 das Rohr 18 fest umklammert, wobei es dieses in einem Winkelbereich von 240° umfasst, und fest am Boden der Ausnehmung anliegt.

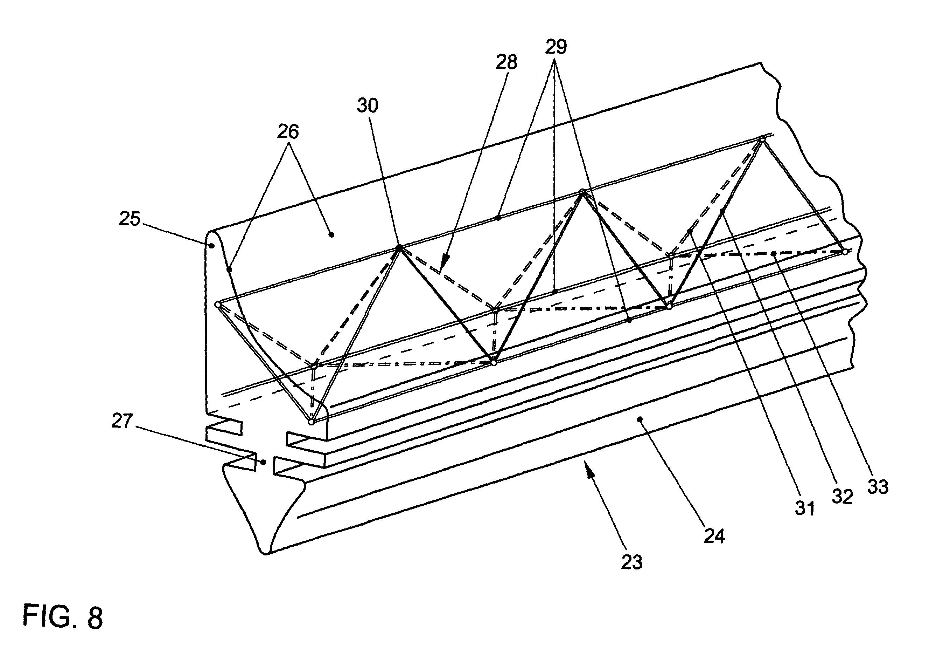

Bei dem in Fig. 7 dargestellten Wischerblatt 19 ist ein torsionssteifes Rohr 20 als Träger integriert und zugleich als Waschflüssigkeitskanal 21 genutzt, indem das Rohr 20 frei von Wischerblattmaterial ist. In das Rohr 20 und das angrenzende Wischerblattmaterial sind beidseits des Wischerblattes 19 als Fächerstrahldüsen ausgebildete Waschflüssigkeitsdüsen 22 eingebracht, die beidseits des Wischerblattes 19 Waschflüssigkeit auf die Frontscheibe 3 sprühen.

Das in Fig. 8 gezeigte Wischerblatt 23 (ohne Anschlussvorrichtung für eine Wischerarm) weist eine Wischlippe 24 zur Anlage an einer Fahrzeugscheibe (3), ein Windleitprofil 25 mit einer Windleitfläche 26 und einen diese (24, 25) verbindenden Kippsteg 27 auf. Im Windleitprofil 25 ist eine Gerüststruktur 28 integriert und allseitig vom gummielastischen Material des Wischerblattes 23 umgeben, hergestellt durch Umspritzung und somit stoffschlüssig verbunden. Die Gerüststruktur 28 ist aus flexiblen PE-Fäden gefertigt und weist in Wischerblattlängsrichtung drei im Abstand voneinander parallel verlaufende PE-Fäden 29 auf, die im Querschnitt des Wischerblattes 23 die Eckpunkte eines rechtwinkligen Dreiecks durchlaufen und zwischen denen an vorbestimmten und regelmäßig angeordneten Knotenpunkten 30 Verbindungsfäden 31, 32 und 33 befestigt sind, die in der integrierten Anordnung gestreckt sind. Diese (Faden-) Gerüststruktur 28 verleiht dem Wischerblatt eine hohe Verwindungssteifigkeit und erlaubt andererseits wegen der Flexibilität der PE-Fäden 29, 31, 32 und 33 eine ausreichende elastische Biegefähigkeit, die es ermöglicht, dass das Wischerblatt 23 mit seiner Wischlippe 24 im montierten Zustand in seiner gesamten Länge an der Fahrzeugscheibe (3) angedrückt ist und die unterschiedlichen Krümmungen derselben, auch im Wischerbetrieb, aufnehmen kann.

### BEZUGSZEICHENLISTE

- 1: Wischerblatt
- 2: Wischlippe
- 3: Frontscheibe
- 4: Windleitfläche
- 5: Wabenstruktur
- 6: Anschlussvorrichtung
- 7: Gelenkzapfen
- 8: Wischerarm
- 9: Schiene
- 10: Schiene
- 11: Steg
- 12: Fronthaube
- 13: Wischerblatt
- 14: -
- 15: Scheibenwischer
- 16: Anschlussvorrichtung
- 17: Wischerblatt
- 18: Rohr
- 19: Wischerblatt
- 20: Rohr
- 21: Waschflüssigkeitskanal
- 22: Waschflüssigkeitsdüsen
- 23: Wischerblatt
- 24: Wischlippe
- 25: Windleitprofil
- 26: Windleitfläche
- 27: Kippsteg
- 28: Gerüststruktur
- 29: PE-Faden
- 30: Knotenpunkt
- 31: PE-Faden
- 32: PE-Faden
- 33: PE-Faden

## Patentansprüche

1. Scheibenwischer für Fahrzeuge, mit einem Wischerarm und einem an diesem angeordneten und an einer Fahrzeugscheibe anliegenden langgestreckten, gummielastischen Wischerblatt mit einer Windleitfläche und einer Wischlippe und mit einem federelastischen, langgestreckten Träger, **dadurch gekennzeichnet, dass** der Träger des Wischerblattes (1, 13, 17, 19, 23) ein Hohlprofil (18, 20) ist oder eine Waben- oder Gerüststruktur (5, 28) aufweist und allseitig von dem Material des Wischerblattes (1, 13, 17, 19, 23) umgeben ist.

2. Scheibenwischer nach Anspruch 1, **dadurch gekennzeichnet, dass** das Hohlprofil (18, 20) bzw. die Waben- oder Gerüststruktur (5, 28) torsionssteif ist.

3. Scheibenwischer nach Anspruch 1, **dadurch gekennzeichnet, dass** das Material des Wischerblattes (1, 13, 17, 19, 23) stoffschlüssig mit dem Träger (5, 18, 20, 28) verbunden ist.

4. Scheibenwischer nach Anspruch 1 oder 3, **dadurch gekennzeichnet, dass** der Träger (5, 18, 20, 28) aus einem Kunststoff einer geringeren Elastizität besteht.

5. Scheibenwischer nach einem oder mehreren der vorhergehenden Ansprüche, **dadurch gekennzeichnet, dass** das Wischerblatt (13) in seiner Projektion auf die Fahrzeugscheibe (3) gekrümmt und in seiner Krümmung an die Randkontur der an die Fahrzeugscheibe (3) angrenzenden Fronthaube (12) angepasst ist.

6. Scheibenwischer nach einem oder mehreren der vorhergehenden Ansprüche, **dadurch gekennzeichnet, dass** das Wischerblatt (19) mit einem Waschflüssigkeitskanal (21) versehen ist, an dem Waschflüssigkeitsdüsen (22) angeschlossen sind, wobei der Waschflüssigkeitskanal (21) mit einer am Wischerarm (8) gehalterten Waschflüssigkeitszuleitung verbunden ist.

7. Scheibenwischer nach Anspruch 6, **dadurch gekennzeichnet, dass** der Waschflüssigkeitskanal (21) durch den Träger (20) gebildet oder an diesem ausgebildet ist.

8. Scheibenwischer nach Anspruch 6, **dadurch gekennzeichnet, dass** die Waschflüssigkeitsdüsen (21) Fächerstrahldüsen sind.

9. Scheibenwischer nach einem oder mehreren der vorhergehenden Ansprüche, **dadurch gekennzeichnet, dass** das Wischerblatt (13) außermittig am Ende des Wischerarms (8) angeordnet ist.

10. Scheibenwischer nach einem oder mehreren der vorhergehenden Ansprüche, **dadurch gekennzeichnet, dass** das Wischerblatt (1, 13, 17, 19) über eine zweiteilige Anschlussvorrichtung (6, 16) mit dem Wischerarm (8) verbunden ist, die den Träger im Bereich einer Ausnehmung im Wischerblatt (1, 13, 17, 19) auf der der Fahrzeugscheibe (3) abgewandten Seite an einem Großteil seines Umfanges, vorzugsweise in einem Winkelbereich von 240°, umgreift.
